# EUROPEAN PATENT APPLICATION

(11) **EP 4 571 278 A2**
(43) Date of publication of application: **18.06.2025**
(21) Application number: 25165423.2
(22) Date of filing: 06.08.2018
(51) Int. Cl.: G01K 1/02

(54) **METHOD AND ASSEMBLY FOR A WIRELESS PROBE AND INTERROGATOR**

(30) Priority: 07.08.2017 US 201715670762
(62) Divisional of application: 18843489.8
(71) Applicant: Preston Industries, Inc., Niles, IL 60714 (US)
(72) Inventor: PRESTON, Philip, Northfield, IL 60093 (US); RACZNYSKI, Walter, Arlington Heights, IL 60004 (US); ZIMNICKI, Charles, Lake Zurich, IL 60047 (US)
(74) Representative: FRKelly

(57) **Abstract**

A method and system for the wireless interrogation of a body immersed in a circulatory bath or a tank for heating. More specifically, the system may include a probe having multiple sensors for gauging a core temperature associated with the immersed body in combination with one or more wireless connections leading to a controller (on a circulator or a user interface) such that the user can determine temperature information (e.g., core temperature) of the body being immersed.

## Description

### FIELD OF THE DISCLOSURE

The present disclosure relates generally to a method and system for the wireless interrogation of the state of a body immersed in a circulatory bath or tank for heating and/or cooling. More specifically, the present disclosure is directed towards a sensing probe having multiple thermal sensors for data enabling the determination of the core and surface temperatures associated with the immersed body in combination with one or more wireless connections leading to a controller (on a laboratory or kitchen thermal circulator device or via some intermediary means, itself connected to said controller) such that the user or the algorithm embedded within the controller can determine temperature information (e.g., core temperature) of the body being immersed and, optionally act upon this 'closed-loop' information.

### BACKGROUND OF THE INVENTION

Conventional thermometers (e.g., meat thermometers) have been used to help provide enhanced information in order for users to be enabled to obtain more consistent results for cooking and laboratory applications. The use of a meat thermometer, for example, can provide a visual indication on whether the meat is still undercooked or if the meat is in danger of being overcooked. However, these conventional types of food thermometers provide a passive indication of temperature and generally rely on the cook to remember to check the temperature and to act upon this additional information. This creates problems insofar as cook or laboratory personnel may lack the requisite experience, discipline, be distracted or the sample or food being processed may be unfamiliar, or the style of food preparation may be new to the cook. In particular, such a conventional thermometer may prove unusable for certain cooking or laboratory environments, such as sous vide style cooking and similar heated baths for laboratory environments where the food or materials are not accessible to a piercing-type probe because using one to materials contained in a bag would pierce the bag and elevate pathogen risk to the food.

More recently, wireless food thermometers have been introduced to provide a more convenient display of the temperature. However, such wireless food thermometers generally provide only a passive display of the temperature and may not provide sufficiently accurate or detailed information during cooking, such as a completion time, when to adjust a temperature, when to start or finish a particular cooking stage such as searing, or how long to let the food rest after removing it from heat. Also, such wireless food thermometers do not provide machine-readable versions of this information such that a controller associated with applying heat to the bath could use to "steer" the cooking. In addition, such wireless food thermometers have a limited range for transmitting information, especially in light of the challenges to conserve space, provide a waterproof enclosure, and withstand elevated cooking or process temperatures. Moreover, such products may have limited transmitting capability due to the composition of the cookware or lab hardware being used. Moreover, such approaches may require an "on board" power source, such as a battery, to enable such wireless communication. Such an approach is undesirable and even dangerous for a food application such as sous vide, and may prove infeasible for a body (whether a lab sample or food source) that must be refrigerated prior to being placed in a heated bath.

To date, Applicant believes that there are no thermometer, communication and interrogation systems which provide a battery-free wireless system for readily measuring temperature and deriving cook or heating time information to a machine intelligence contained in a circulator, to the cook or for a laboratory technician to control an experiment or process variable.

What is needed is a wireless thermometer and interrogator system for using with a sample or foodstuff in a circulating water bath with a reliable antenna or other wireless data transmitting and receiving device and a transmitter for querying and a receiver for receiving a variety of temperature data and providing an accurate summary of processed temperature information (e.g., core temperature, remaining cook time) therefrom.

### DEFINITION OF TERMS

The following terms are used in the claims of the patent as filed and are intended to have their broadest plain and ordinary meaning consistent with the requirements of the law:
A very low frequency signal is a radio signal having a frequency below 1 MHz and preferably on the order of less than 500 KHz, in the event of a non-conductive pot or bath container, and preferably on the order of 500KHz-1MHz in the event of a conductive pot or bath container.

A very high frequency (GHz-THz) signal are electromagnetic signals in the infrared or visible light spectrum, in the case of infrared this signal can occupy frequencies from 300GHz to 430THz and in the case of visible light, this signal can occupy frequencies from 430-790THz. The equivalent structure to an RF Antenna in these frequency regimes for transmitting a signal is a photo emitter, such as an LED and for receiving a signal is a photo detector, such as a solar cell or PIN diode, etc.

A light transmitter is an infrared or visible light transmitter (such as a LED with suitable emission characteristics)

A light harvester is a solar cell or phototransistor or PIN photodiode with appropriate sensitivity characteristics

A probe array is a structure for placing in a body that includes multiple temperature sensors and a transmitter or an antenna.

A body is the protein or sample being measured by a probe and is placed in a container for immersion in a bath.

Where alternative meanings are possible, the broadest meaning is intended. All words used in the claims set forth below are intended to be used in the normal, customary usage of grammar and the English language.

### SUMMARY OF THE INVENTION

The present invention relates to one or more of the following features, elements or combinations thereof.

The Applicants have invented a probe assembly for providing body temperature data for a body immersed in a bath (either in a laboratory setting or kitchen, such as sous vide) to a remote interrogator outside of the bath. The probe most preferably includes a rigid member (for ease of insertion), though variants of the present invention may incorporate non- and semi-rigid members also (e.g., reminiscent in rigidity of a coffee stirrer or soda straw).

The probe array includes a first end and a second end, and a shaft extending between the two ends. The first end of the probe is inserted into a body (whether a protein for cooking purposes or a laboratory sample) and the second end of the probe includes for low frequency RF signals an antenna and transmitter and receiver (or for very high, THz signals, an emitter and detector) and an electronic chip. The probe further includes multiple temperature sensors disposed along the length of the shaft, with at least one near the first end and one at the most distal end. The on-board controller IC receives temperature data from the sensors and stores the temperature data to provide to the antenna in response to interrogation from an interrogating signal.

In a light powered embodiment, the probe array includes a capacitor and a light energy harvester (photodetector) electrically for receiving light energy from a remote light source (whether solar powered or via another light source) to power the transmitter and chip and to an infrared or visible light transmitter (photoemitter) for sending temperature data back to the interrogating device . In this light enabled embodiment, a transmitter sends a very high frequency electromagnetic (infrared or visible light) signal from one or more probes to an interrogating transponder. The light enabled transponder or circulator requires a physical "window" embedded in its housing that is transparent to electromagnetic energy in the infrared or visible wavelength ranges, and this window can be embedded in the circulator, heated bath, the temperature controlled bath or an attachment. The transponder further optionally includes an LED whose light energy can be harvested by the probes working with the transponder. The signal from the probe(s) is transmitted preferably through a infrared transmitter (emitter, such as an IR LED), preferably by means of a modulated signal using a carrier frequency, similar to a television remote control (though a visible light wavelength may be used as well). The signal can also be sent using infrared with a serial protocol similar to IRDA. In this embodiment, power can also be harvested by the probe from ordinary ambient illumination.

In an alternative, RFID embodiment, the very low frequency antenna on the probe bi-directionally communicates with and receives power transmitted from one or more interrogator antennas. In this alternative embodiment, the chip receives power via the carrier envelope associated with the interrogation signal, so as to avoid the need for a battery that would otherwise be required to power the circuit, though the probe may also include a capacitor for storing energy received from the interrogating signal. This interrogator antenna or antennas can be integral to or added to the body of the bath (e.g., one or more surfaces of a pot, sous vide cooker or laboratory beaker or the like). The interrogator antenna(s) comprises one or more conductive loops surrounding the bath so as to ensure uninterrupted interrogation of the probe. The interrogator antenna further connects - either wirelessly via relay coils or via a "hard" electrical connection - to an interrogator that takes the multiple temperature sensor readings and interprets their values to determine: 1) what the core temperature is; and 2) what the remaining time is for cooking or remaining in the bath.

Thus, it can be seen that one object of the disclosed invention is to provide a probe and interrogatory system that wirelessly provides a substantially continuous temperature analysis for a sous vide cooker.

A further object of the present invention is to provide a probe and interrogatory system that wirelessly provides a substantially continuous temperature analysis for laboratory samples in a liquid circulator, heated bath, or temperature controlled bath.

Still another object of the present invention is to provide a probe and interrogatory system that can be used to accurately determine core temperature of a body without concern for a precise probe placement.

Yet another object of the present invention is to provide a probe and interrogatory system that can be used wirelessly in an elevated temperature liquid bath environment.

Still another object of the present invention is to provide a probe and interrogatory system that can be used wirelessly without an on-board battery power source.

Another object of the present invention is to provide a probe and interrogatory system that can be retrofitted to existing cookware and/or laboratory equipment.

Yet another object of the present invention is to reduce a chef's workload from having to determine a protein type, thickness, starting temperature, shape, to merely requiring the chef know the type of protein involved.

It should be noted that not every embodiment of the claimed invention will accomplish each of the objects of the invention set forth above. For instance, certain claimed embodiments of the invention may focus solely upon cooking functions. In addition, further objects of the invention will become apparent based upon the summary of the invention, the detailed description of preferred embodiments, and as illustrated in the accompanying drawings. Such objects, features, and advantages of the present invention will become more apparent in light of the following detailed description of various preferred embodiments thereof, and as illustrated in the accompanying drawings.

### BRIEF DESCRIPTION OF THE DRAWINGS

Figure 1 is a perspective figure of a probe and interrogator assembly in accord with a first preferred embodiment of the present invention.
Figure 2 is a side view of the probe shown in figure 1.
Figure 3 is a perspective view of the probe shown in figure 1 about to be inserted into a protein body.
Figure 4 is an alternative probe configuration of another preferred embodiment of the present invention.
Figure 5 is a further alternative embodiment showing the probe components according to yet another preferred embodiment of the present invention.
Figures 6a, 6b and 6c show different example placements of a probe in accordance with the present invention.
Figure 6d shows a prophetic example temperature profile in accord with the application of the probe pursuant to the present invention.
Figure 7 shows yet another variant of the probe in accord with still another embodiment of the present invention.
Figures 8a and 8b shows an infrared, visible light or solar powered variant of the probe in accordance with yet another embodiment of the present invention.
Figure 9a-b shows elements of the probe and interrogator assembly in accord with another preferred embodiment of the present invention.

### DETAILED DESCRIPTION OF EMBODIMENTS OF THE INVENTION

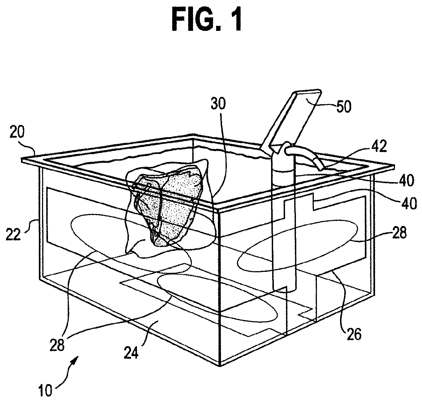

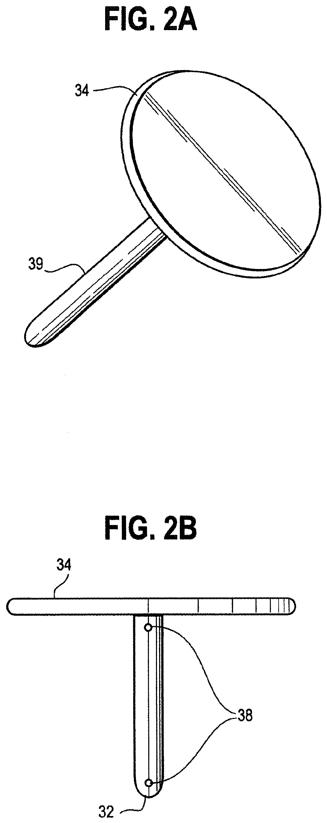

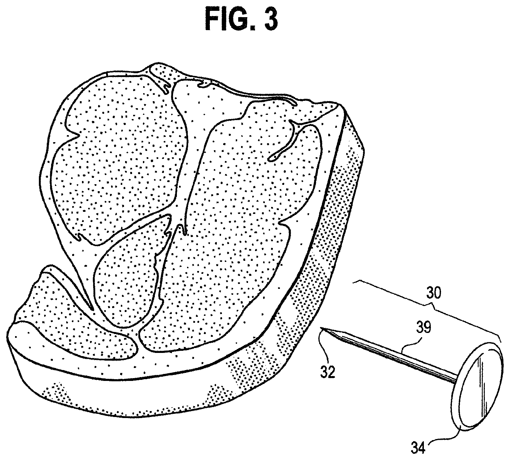

As can be seen in FIGURES 1-3, one application for an first preferred embodiment of the probe and interrogator assembly 10 is with respect to sous vide cooking (in this case, a steak, though of course other proteins or bodies can likewise be used). In this embodiment, the assembly includes a tank 20 or cooker, a probe 30, a circulator 40 (which can alternatively comprise a heated bath, or temperature controlled bath) and an interrogator 50.

In its radio frequency driven embodiments, the tank 20 is preferably a non-conductive material so as to eliminate any type of "Faraday cage" effect, though this can be offset, among other means, by changing the frequency of the radio communication used with the probe 30 or by judicial placement of the interrogating antenna to be within the bounds of the "Faraday cage". That is, applicant believes that the use of a non-conductive tank permits a much lower frequency (e.g., around 300-400KHz, such as very low frequency RFID signals) for communicating effectively with the probe, while the use of a conductive tank would require a higher frequency range (e.g., 500KHz to 1MHz), while still staying below higher frequency signals that would not work sufficiently in water to interrogate the probe 20.

In this embodiment, the tank 20 includes a bottom 22 and sides 24, each of which has located thereon adhesives 26 with antenna loops 28 located thereon so as to provide antennas in defining a multiplicity of planes so as to ensure proper communication with the probe 30. Alternatively, such antenna loops could be painted on, etched on, affixed decal or applique-like, or molded to the tank. As a further alternative, the tank 20 could include a lid (not shown) with an additional antenna loop.

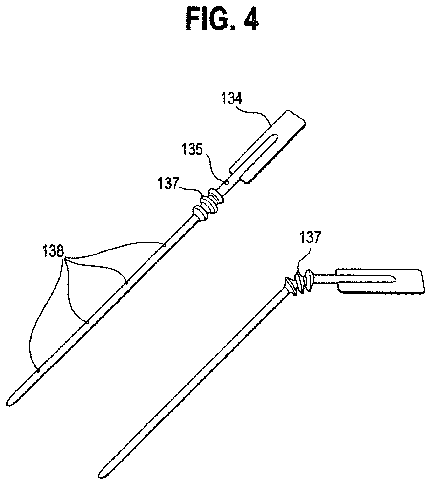

The probe 30 is comprised of a first end 32 or tip and a second end 34 or head. The second end 34 has an antenna 35 and a chip or microcontroller 36 located thereon for communication with and receiving power supply from the antenna loops 28. The probe also contains multiple sensors 38 which are linearly displaced along the length or axis of the shaft 39. The probe thus enables readings of different points inside the protein or body upon insertion. As shown in FIGURE 4, an alternative version of the probe 130 can include a head 134 with an antenna 135, and a microcontroller 136 on the shaft 139, as well as a flexible portion 137 (reminiscent of the joint in a bendable straw) for permitting the head 134 to lay flat on the protein after the probe 130 is inserted. Note that the antenna 135 coil preferably comprises approximately 300 turns of @41 enameled wire with an OD of 40mm and an ID of roughly 30mm and a thickness of around 1mm. This iteration of coil can be placed (for instance) on either a microcontroller 136 such as a polyester flexi circuit or a very thin (0.1mm) FR4.

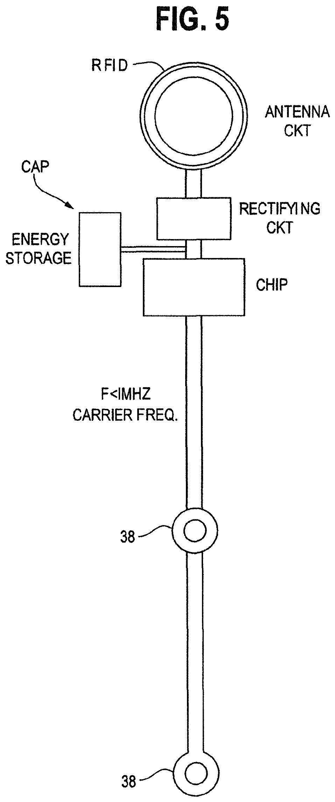

As show in FIGURE 5, In addition to the coil or antenna 245, there is a microcontroller 236 that is preferably a very low power 32 bit microcontroller, a diode 236a and small capacitor 236b (for energy harvesting from the signals being received) and a plurality of thermal sensors 238 placed in a linear spaced-apart fashion, each being read upon every query from the interrogator 50-all cooperatively providing a thermal cross-section that includes surface and core temperatures to the querying device.

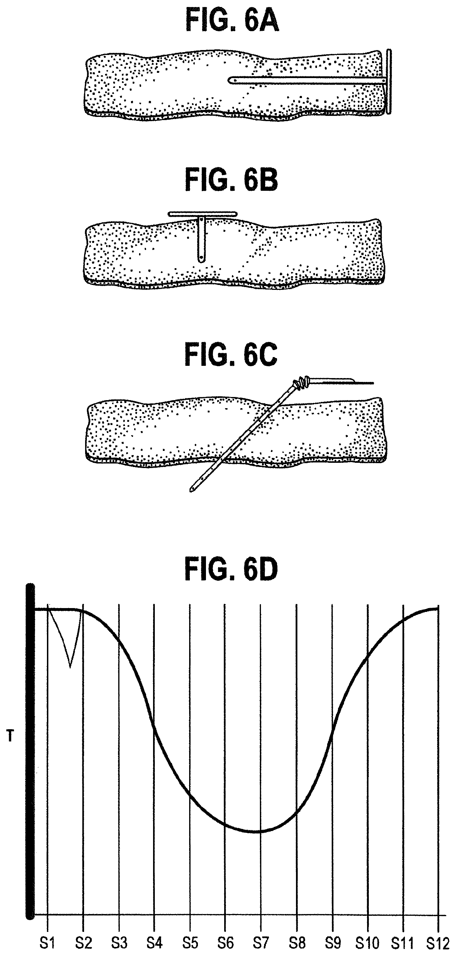

Some of the advantages and uses of the probe is shown in FIGURES 6a-c. That is, the probe can be used by the interrogator 50 to determine the core temperature for cooking purposes without concern for precise placement of the probe within the body of the protein. This capability is enabled through the array of sensors 38, each of which has its own associated temperature. Such information, as shown in a prophetic example graphed in FIGURE 6d, is shown with each sensor corresponding to an "S" value on the graph. This data is processed by a controller (not shown) in the interrogator 50 whereby the inverse of the temperature (i.e., the coolest temperature) will be interpreted to be the "core" temperature for calculating the remaining time for cooking. Thus, the use of such data processing by the controller reduces a chef's workload from having to determine a protein type, thickness, starting temperature, shape, to merely requiring the chef know the type of protein involved.

The present invention can, therefore, enable virtually automated cooking, avoiding the requirement for the cook to enter the type and shape of protein, the thickness, done-ness temperature, etc. with the only user input settings being: a) identification of foodstuff (i.e.: steak, chicken, carrots, etc.) and b) time past Pasteurization (otherwise known as" tenderness time") because as a rule of thumb: connective tissues break-down during prolonged low-temperature cooking times and given sufficient cooking time: even the toughest proteins can become tender.

The circulator 40 is of any standard type of circulator, heated bath, or temperature controlled bath known to be used in laboratory or cooking equipment, and is further electrically connected to a controller 50 or interrogator for taking the data from the probe to provide to a user. The interrogator 50 includes a microcontroller which (in the radio frequency embodiments) scans a band of frequencies (e.g., from about 300-400kHz) and then calibrates itself to the resonance of the interrogated probe, thus making the system auto-calibrating vis-a-vis "best" frequency. In this embodiment, the circulator 40 further includes a multi loop metallic relay coil 42 disposed therein, wherein the coil 42 is in close proximity and communicates wirelessly with a reciprocal relay coil antenna 44 on adhesive 26. This coil may be coupled with the coil of the circulator 40. Thus, the circulator generates a very low frequency RFID signal that both powers the probe and receives data from the probe. It should also be understood, however, that the circulator, in alternative embodiments, may be physically connected to the relay coil antenna 44 for providing only a single wireless connection to the probe 30.

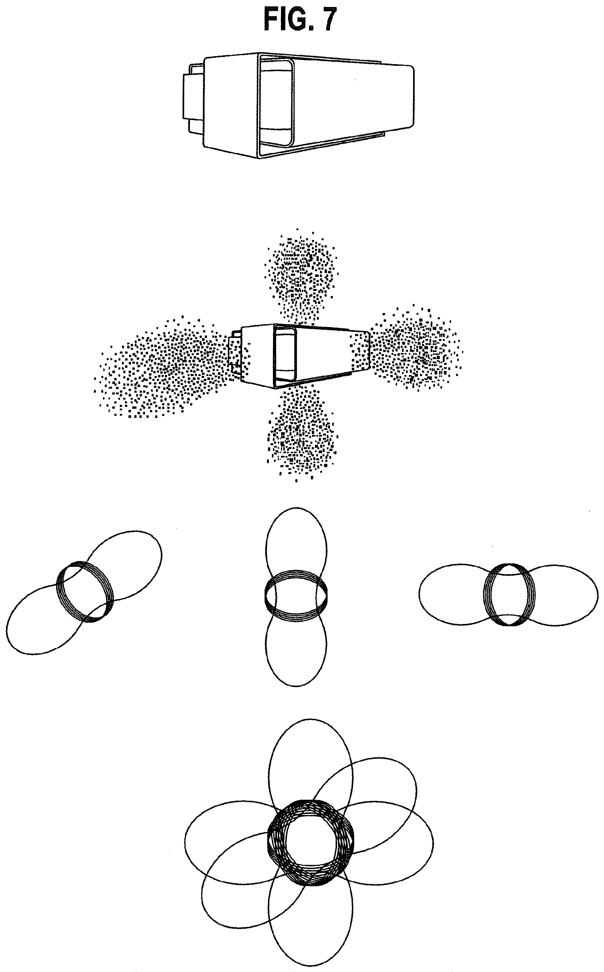

In still further variants of the present invention such as shown in FIGURE 7, the probe 230 can include a multidimensional or 3D antenna 236 comprising multiple coils that define multiple planes for superior communication with the interrogator 50. In such an embodiment, it may be possible for the tank to comprise just a single antenna loop 28 surrounding the tank 20.

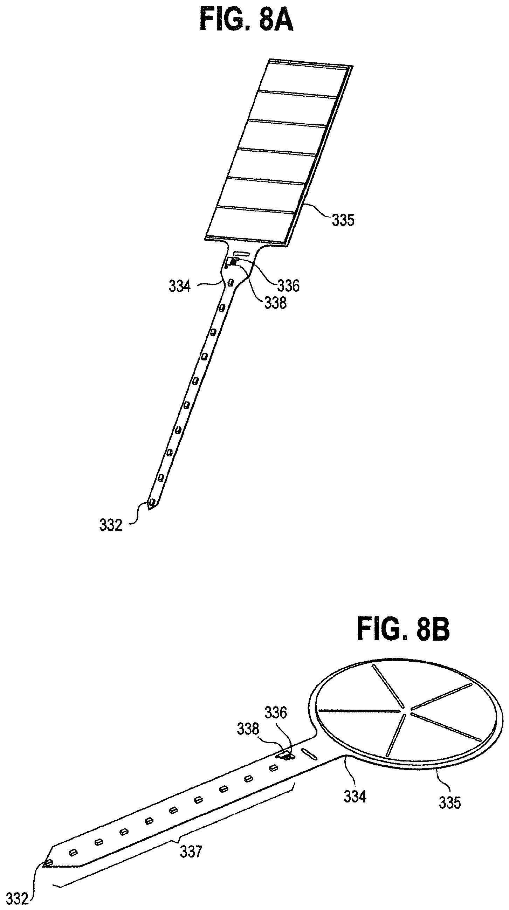

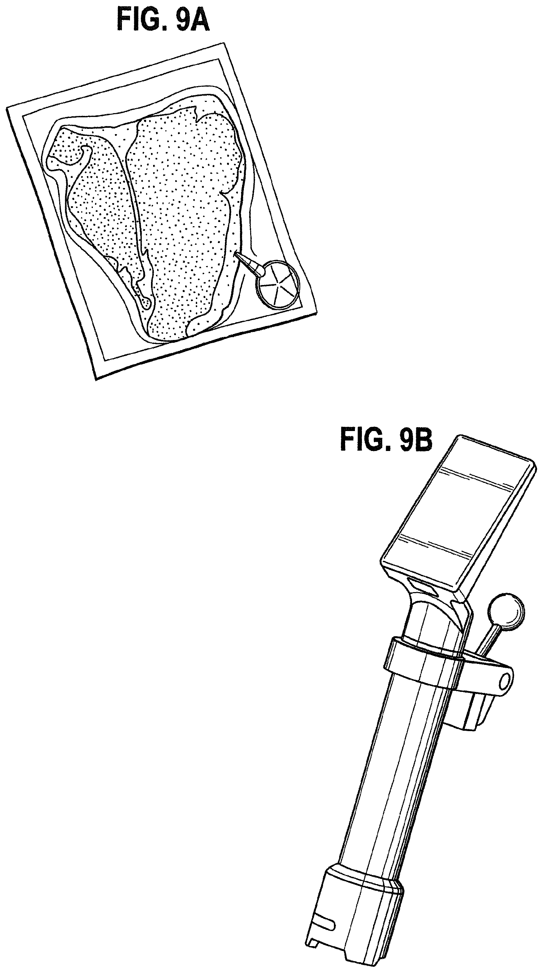

In yet another embodiment of the present invention as shown in FIGURES 8a-b and 9a-b, the probe array of the present invention may involve an infrared or light based probe 330. Among the advantages to this embodiment of the present inventive system is its particular applicability to equipment including a window of transparent material (e.g., glass) for the transmitting of probe signals, particularly with respect to use cases involving water baths (such as sous vide and laboratory environments). On a separate but related point is the ability of such probes to absorb sufficient light energy either from a LED contained in the interrogating unit or even in conjunction with low intensity ambient light levels in order to provide the working voltage needed to operate the probe without requiring a battery.

In this embodiment, the probe 330 is preferably comprised of a transmitter 336 which is preferably a visible light or infrared light transmitter which sends very high frequency light signals (>700THz) to a transponder 352 such as a photo transistor/photo detector on the interrogator 350. As with the RFID embodiment, this embodiment of the probe 330 involves a first end 332 or tip and a second end 334 or head and a number of sensors 337 on the axis defined therebetween. The probe 330 is in a sealed pouch and the first end 332 is inserted in a foodstuff or protein such that only the second end 334 is exposed from the body of the protein but still within the confines of the sealed pouch. The second end 334 has an energy harvester 335 such as a solar cell, panel or PIN Photodiodes and a chip or microcontroller 338 attached thereto for communication with and receiving power supply from the either ambient light and/or a interrogator window 354 containing a light source (such a LED light) as well as the photo detector or transponder 352 on the interrogator 350. Energy received from the harvester 335 may be stored in a capacitor (not shown) in order to maintain the operation of the chip 338 The transponder 352 receives temperature related data from the chip 338 via the transmitter 336 which is sent preferably through a infrared signal, most preferably through a modulated IR signal using a carrier frequency, similar to a television remote control (though a visible light wavelength may be used as well). The signal can also be sent using infrared with a serial protocol similar to IRDA so as to avoid unwanted interference from other sources. Once in an interrogator 350, the temperature data may be processed in essentially the same fashion as described with other embodiments above for processing in the control head 356 and providing information to the user via the user interface 358.

While the disclosure is susceptible to various modifications and alternative forms, specific exemplary embodiments thereof have been shown by way of example in the drawings and have herein been described in detail. It should be understood, for example, that the number and specific locations of the sensors may vary depending upon cost considerations. Likewise, it may be desirable to port some of the data processing from the interrogator 50 to the microcontroller 36 on the probe. In addition, while the interrogator is preferably not located in the bath of the tank 20, there is no requirement that the user interface has to be connected to the circulator - rather, such information could be ported to a remote computer or device (such as a phone application). There is no intent to limit the disclosure to the particular embodiments disclosed, but on the contrary, the intention is to cover all modifications, equivalents, and alternatives falling within the spirit and scope of the disclosure as defined by the appended claims.

Additional aspects of the invention are as follows:
1. A probe assembly for providing body temperature data to a remote interrogator outside of a bath containing the body, the probe assembly comprising:
   A rigid member having a first end, a second end, and a shaft extending therebetween;
   A first sensor at the first end for providing temperature data related to the interior of the body;
   A light transmitter at the second end of the rigid member for providing temperature data to a remote interrogator through the bath;
   A chip on the second end for receiving temperature date from the first sensor, the chip storing said temperature data to provide to the transmitter; and
   A light harvester on the second end for receiving power for the chip and the light transmitter.
2. A probe assembly for providing temperature data corresponding to surface and interior temperatures for a body residing in a bath, and for enabling temperature data to be transmitted to remote interrogator, the probe assembly comprising:
   a) a rigid member comprising a first end and a second end, and a shaft extending there between, the first end to be inserted into the body and the second end being outside the body;
   b) a first sensor at the first end for receiving temperature data corresponding to the interior of the body;
   c) a second sensor at the second end for receiving temperature data corresponding to the surface of the body;
   d) a light transmitter at the second end for relaying temperature data received from the first sensor and the second sensor;
   e) A chip on the second end for receiving temperature data from the first sensor and the second sensor, the chip storing said temperature data to provide to the transmitter; and
   f) a light harvester on the second end for receiving power for the chip and the light transmitter from an emitter on the remote interrogator or from ambient illumination.
3. A probe and interrogator assembly for monitoring temperature data of at least the interior of a body in a bath, the assembly comprising:
   a) an interrogator comprising:
      i) a controller; and
      ii) a transceiver, the transceiver including a window with a photoreceptor for receiving a signal from a probe assembly;
   b) a probe assembly for providing body temperature data to a remote interrogator outside of a bath containing the body, the probe assembly comprising:
      i) a rigid member having a first end, a second end, and a shaft extending therebetween,
      ii) a first sensor at the first end for providing temperature data related to the interior of the body;
      iii) a light transmitter at the second end for relaying temperature data receiving by the first sensor and the second sensor;
      iv) A chip on the second end for receiving temperature data from the first sensor and the second sensor, the chip storing said temperature data to provide to the light transmitter ; and
      v) a light harvester on the second end for receiving power for the chip and the light transmitter.
4. The probe and interrogator assembly of aspect 3, wherein the interrogator further comprises a user interface for providing a display related to the temperature data to a user.
5. A probe and interrogator assembly for monitoring temperature data of at least the interior of a body in a bath, the assembly comprising:
   a) an interrogator comprising:
      i) a controller; and
      ii) a transceiver, the transceiver including a plurality of continuous loops rotationally and orthogonally displaced from one another for transmitting a very low frequency signal for powering a remote probe and receiving temperature data from the remote probe; and
   b) a probe assembly for providing body temperature data to a remote interrogator outside of a bath containing the body, the probe assembly comprising:
      i) a rigid member having a first end, a second end, and a shaft extending therebetween,
      ii) a first sensor at the first end for providing temperature data related to the interior of the body;
      iii) an antenna at the second end of the rigid member for providing temperature data in response to an interrogation very low frequency signal transmitted by the remote interrogator through the bath; and
      iv) a chip on the second end for receiving temperature data from the first sensor, the chip storing said temperature data to provide to the antenna in response to the interrogation very low frequency signal, and the chip receiving power via the interrogation very low frequency signal.
6. A probe and interrogator assembly for monitoring temperature data of at least the interior of a body in a bath, the assembly comprising:
   a) an interrogator comprising:
      i) a controller; and
      ii) a transceiver, the transceiver including a continuous loop for transmitting a very low frequency signal for powering a remote probe and receiving temperature data from the remote probe; and
   b) probe assembly for providing body temperature data to a remote interrogator outside of a bath containing the body, the probe assembly comprising:
      i) a member having a first end, a second end, and a shaft extending therebetween;
      ii) a first sensor at the first end for providing temperature data related to the interior of the body;
      iii) an antenna comprising a plurality of continuous loops rotationally and orthogonally displaced from one another at the second end of the rigid member for providing temperature data in response to an interrogation very low frequency signal transmitted by the remote interrogator through the bath; and
      iv) a chip on the second end for receiving temperature data from the first sensor, the chip storing said temperature data to provide to the antenna in response to the interrogation very low frequency signal, and the chip receiving power via the interrogation very low frequency signal.
7. The probe and interrogator assembly of aspect 6, wherein the member of the probe assembly is semi rigid.
8. A probe assembly for providing body temperature data to a remote interrogator outside of a bath containing the body, the probe assembly comprising:
   A rigid member having a first end, a second end, and a shaft extending therebetween;
   A first sensor at the first end for providing temperature data related to the interior of the body;
   An light emitter at the second end of the rigid member for providing temperature data in response to an interrogation signal transmitted by a LED emitter contained in the remote interrogator through the bath medium;
   A chip on the second end for receiving temperature data from the first sensor, the chip storing said temperature data to provide to a remote interrogator via the infrared transmitter; and
   A light harvester electrically connected to the infrared transmitter for receiving visible light or infrared energy for receiving power from a remote light source to power the transmitter and chip.

## Claims

1. A probe and interrogator assembly for monitoring temperature data of at least the interior of a body in a bath, the assembly comprising:
a) an interrogator comprising:
i) a controller; and
ii) a transceiver, the transceiver including a plurality of continuous loops rotationally and orthogonally displaced from one another for transmitting a very low frequency signal for powering a remote probe and receiving temperature data from the remote probe; and
b) a probe assembly for providing body temperature data to a remote interrogator outside of a bath containing the body, the probe assembly comprising:
i) a rigid member having a first end, a second end, and a shaft extending therebetween,
ii) a first sensor at the first end for providing temperature data related to the interior of the body;
iii) an antenna at the second end of the rigid member for providing temperature data in response to an interrogation very low frequency signal transmitted by the remote interrogator through the bath; and
iv) a chip on the second end for receiving temperature data from the first sensor, the chip storing said temperature data to provide to the antenna in response to the interrogation very low frequency signal, and the chip receiving power via the interrogation very low frequency signal.

2. A probe and interrogator assembly for monitoring temperature data of at least the interior of a body in a bath, the assembly comprising:
a) an interrogator comprising:
i) a controller; and
ii) a transceiver, the transceiver including a continuous loop for transmitting a very low frequency signal for powering a remote probe and receiving temperature data from the remote probe; and
b) probe assembly for providing body temperature data to a remote interrogator outside of a bath containing the body, the probe assembly comprising:
i) a member having a first end, a second end, and a shaft extending therebetween;
ii) a first sensor at the first end for providing temperature data related to the interior of the body;
iii) an antenna comprising a plurality of continuous loops rotationally and orthogonally displaced from one another at the second end of the rigid member for providing temperature data in response to an interrogation very low frequency signal transmitted by the remote interrogator through the bath; and
iv) a chip on the second end for receiving temperature data from the first sensor, the chip storing said temperature data to provide to the antenna in response to the interrogation very low frequency signal, and the chip receiving power via the interrogation very low frequency signal.

3. The probe and interrogator assembly of claim 2, wherein the member of the probe assembly is semi rigid.
